(19) **Europäisches Patentamt / European Patent Office / Office européen des brevets**

(11) **EP 4 761 473 A1**

(12) **EUROPEAN PATENT APPLICATION**

(43) Date of publication:
**17.06.2026 Bulletin 2026/25**

(21) Application number: **24383350.6**

(22) Date of filing: **10.12.2024**

(51) International Patent Classification (IPC):
**H05H 1/46** (2006.01)     **B64G 1/40** (2006.01)
**F03H 1/00** (2006.01)

(52) Cooperative Patent Classification (CPC):
**H05H 1/4652;** B64G 1/4005; B64G 1/413;
F03H 1/0081

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Kreios Space S.L.**
**27004 Lugo (ES)**

(72) Inventors:
- **VÁZQUEZ RODRÍGUEZ, David**
  **27004 LUGO (ES)**
- **BARCELÓ GREGORIANO, Adrià**
  **27004 LUGO (ES)**
- **MATARÓ NÚÑEZ, Jan**
  **27004 LUGO (ES)**
- **BOSCH LLOVERAS, Francisco**
  **27004 LUGO (ES)**

(74) Representative: **Herrero & Asociados, S.L.**
**Edificio Aqua - Calle Agustín de Foxá, 4-10, 2ºA**
**28036 Madrid (ES)**

(54) **TWISTED BIRDCAGE ANTENNA FOR OPTIMIZING PLASMA GENERATION**

(57)     A twisted birdcage antenna (200) designed for optimizing plasma generation, comprising two parallel conductive rings (210, 220) separated along a longitudinal axis, which provide structural support and housing capacitors for tuning the antenna to a resonant frequency, connected by helically configured conductive elements (230), arranged with a specific twist angle to form a hyperboloid shape. This helical geometry creates a uniform and efficient electromagnetic field distribution, improving energy transfer and plasma ionization efficiency. Capacitors are positioned between adjacent helical conductive elements (230) on the rings (210, 220), allowing the antenna (200) to be tuned to specific resonant modes, such as mode 1, which ensures rotational symmetry of the generated electromagnetic field. An RF coaxial input on the bottom ring (220) connects the birdcage antenna (200) to an RF power source, enabling plasma excitation. This design is ideal for efficient plasma generation in Atmospheric-Breathing Electric Propulsion systems operating in VLEO and in higher orbits beyond VLEO.

FIG. 2

EP 4 761 473 A1

**Description**

**Field of the invention**

The present invention relates to the field of radiofrequency (RF) antennas and their applications in plasma generation systems. More specifically, the invention is particularly advantageous for use in Atmospheric-Breathing Electric Propulsion (ABEP) systems operating in Very Low Earth Orbit (VLEO), while also being suitable for helicon thrusters utilizing propellant for satellite propulsion in higher orbits beyond VLEO.

More particularly, the present invention refers to a birdcage antenna for addressing the efficiency challenges of plasma generation in environments with extremely low atmospheric densities, enabling sustained and energy-efficient plasma propulsion.

**Background of the invention**

Birdcage-type antennas are widely utilized in applications requiring uniform electromagnetic field distribution. The classic birdcage antenna consists of two parallel rings made of a conductive metal, separated by a certain distance. These two rings are connected by evenly spaced straight conductive elements (legs), forming the characteristic cylindrical geometry from which it derives its name. The antenna forms a hollow cylinder without top or bottom caps, with the rings as the base and the legs as conductive strips on the lateral surface of the cylinder, resembling a cylindrical birdcage. Additionally, specific capacitors are placed between each pair of adjacent legs on the rings, with values theoretically calculated to select the desired operating mode of the antenna.

One of the most established uses of birdcage antennas is in Magnetic Resonance Imaging (MRI), where their cylindrical geometry facilitates the generation of a homogeneous transverse electromagnetic field. Capacitors placed between adjacent legs on the rings allow fine-tuning of the resonance frequency, making birdcage antennas highly suitable for "mode 1" operation in MRI, where azimuthal currents are necessary to achieve rotational symmetry.

More recently, birdcage antennas have been explored for their potential in plasma generation, especially in applications such as helicon plasma thrusters for Atmospheric-Breathing Electric Propulsion (ABEP) systems in Very Low Earth Orbit (VLEO). In this context, birdcage antennas serve as an RF energy coupling mechanism to generate and sustain plasma by ionizing residual atmospheric particles. The Horizon Discoverer project, led by the University of Manchester, with the Institute of Space Systems (IRS) as part of the consortium responsible for designing and developing the birdcage antennas and ABEP systems, successfully demonstrated the feasibility of adapting traditional birdcage antennas for plasma generation in VLEO conditions.

The project utilized RF-powered birdcage antennas to create helicon waves that ionized particles like argon, nitrogen and oxygen, achieving plasma densities sufficient for propulsion.

However, conventional birdcage antennas have inherent limitations in such applications. Specifically, suboptimal RF coupling with plasma and significant power losses reduce overall efficiency, requiring higher RF power inputs to achieve stable ionization levels. This inefficiency complicates the practical implementation of birdcage antennas in long-duration VLEO missions, where energy resources are constrained.

Despite the promising results demonstrated by traditional birdcage antennas in plasma generation for ABEP systems, their practical implementation remains hindered by two key issues:

1. Suboptimal RF Coupling Efficiency: The conventional design, relying on straight conductive elements, struggles to achieve efficient energy transmission between the antenna and the plasma. This results in energy losses and reduces the plasma density achievable for a given RF power input.
2. High Power Consumption: The inability of traditional birdcage antennas to achieve optimal RF coupling necessitates higher power inputs to sustain plasma ionization, leading to reduced efficiency in energy-constrained environments like VLEO.

Therefore, it is highly desirable to provide an antenna design to improve the energy efficiency and RF coupling performance of birdcage antennas to enable sustained and effective plasma generation in VLEO for ABEP systems, which is particularly critical given the low atmospheric density and energy constraints typical of VLEO operations.

Summary of the invention

The present invention solves the aforementioned problems and overcomes previously explained state-of-art work limitations by providing an advanced antenna design optimized for improved RF energy coupling and enhanced electromagnetic field distribution.

The proposed (referred to as the "twisted birdcage") antenna design introduces a helical configuration for the conductive elements of a birdcage antenna, providing a twist of the legs, which optimizes the electromagnetic field distribution and enhances RF energy transfer to the plasma. By addressing the aforementioned limitations of the conventional (straight) birdcage antenna, the invention enables greater thrust efficiency and longer mission durations without necessitating excessive RF power inputs. Therefore, the (twisted) antenna birdcage antenna is particularly suited for plasma generation applications specifically used in ABEP systems in VLEO, where efficient RF coupling and reduced power losses are critical for sustained propulsion.

The invention is set out in the appended set of claims.

The present invention has a number of advantages with respect to prior art, which can be summarized as follows:

- Enhanced Efficiency in RF Coupling: Up until today, there have been several proposals to get a proper antenna, such as Boswell type, helical, Sonji, birdcage... but none of them has achieved as good coupling as the proposed design based on the geometric shape generated by the helicon wave by its own nature and the modified legs; the helical conductive elements improve energy transfer to the plasma, reducing power losses and increasing plasma density. This modification allows a significant increase in ionized particle densities while considerably reducing RF power input. At the moment, no electrodeless thruster is efficient enough to be viable in the very low Earth orbit (VLEO). So, this efficiency boost is vital for missions to operate in VLEO extending satellite lifespans and enabling sustained operations.

- Advanced Adaptability: The adapted antenna design addresses the specific environmental and operational challenges present in VLEO. This means a technology tailored for the low-power demands of low-altitude missions, ensuring robust propulsion systems within these specialized applications.

- Greater Energy Efficiency: The antenna achieves effective plasma ionization with lower RF power inputs, enabling sustained operation in energy-constrained environments.

- Improved Field Distribution: The twisted design produces a more uniform electromagnetic field, critical for stable plasma generation and propulsion. This could potentially revolutionize propulsion systems for space missions, especially those focused on Earth Observation and Telecommunications at very low altitudes, catering to the growing demand for sustained, high-resolution satellite operations. These and other advantages will be apparent in the light of the detailed description of the invention.

**Description of the drawings**

For the purpose of aiding the understanding of the characteristics of the invention, according to a preferred practical embodiment thereof and in order to complement this description, the following Figures are attached as an integral part thereof, having an illustrative and non-limiting character:

Figure 1 shows a straight birdcage antenna, according to the cylindrical geometry of the conventional design of birdcage antennas known in prior art.

Figure 2 shows a helical structure for a birdcage antenna with a twisted birdcage antenna design, according to a preferred embodiment.

Figure 3 shows a graphical comparison of azimuthal current distributions between the straight birdcage antenna (as the one shown in Figure 1) and the birdcage antenna design featuring helically rotated legs (as the one shown in Figure 2) at various rotation angles $\phi$.

**Preferred embodiment of the invention**

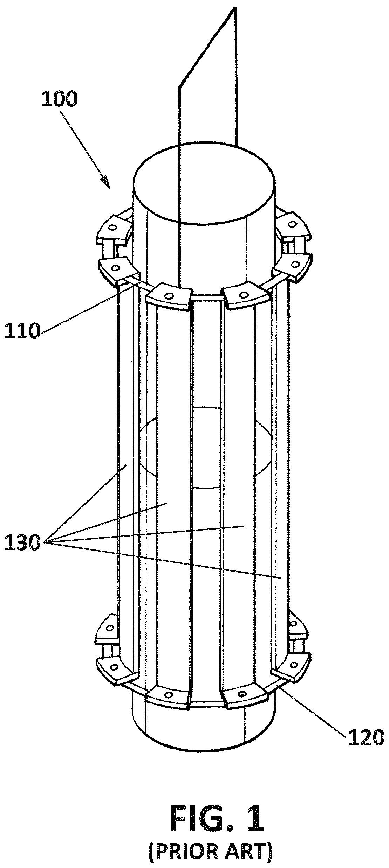

Figure 1 shows a conventional birdcage antenna (100), which consists of:

- Two parallel conductive rings (110, 120), typically made of a highly conductive material such as copper. There is an upper ring (110) and a lower ring (120) located respectively at the top and bottom of the cylindrical structure. Both rings (110, 120) also hold the capacitors and are crucial for tuning and operation of the antenna (100).

- Straight conductive elements (130) or straight legs, which connect both rings (110, 120), running vertically between these two rings (110, 120) and so forming a cylindrical structure resembling a birdcage. These straight conductive elements (130) are evenly spaced conductive strips.

- Capacitors placed between adjacent legs/conductive elements (130) on the rings (110, 120) and configured to tune the antenna (100) to the desired target resonant frequency, typically in the range of units to tens of MHz (e.g., in the range of 13-70 MHz).

The geometry of this straight birdcage antenna (100) is effective for generating uniform transverse electromagnetic fields but suffers from suboptimal RF coupling and significant energy losses in plasma generation scenarios.

The coordinate system shown in Figure 1 just provides a clear reference for the dimensions (the values denote measurements, along the vertical axis and on the horizontal grid, in meters) and spatial orientation of the traditional birdcage antenna (100), aiding in visualizing its cylindrical geometry and proportional relationships between its components.

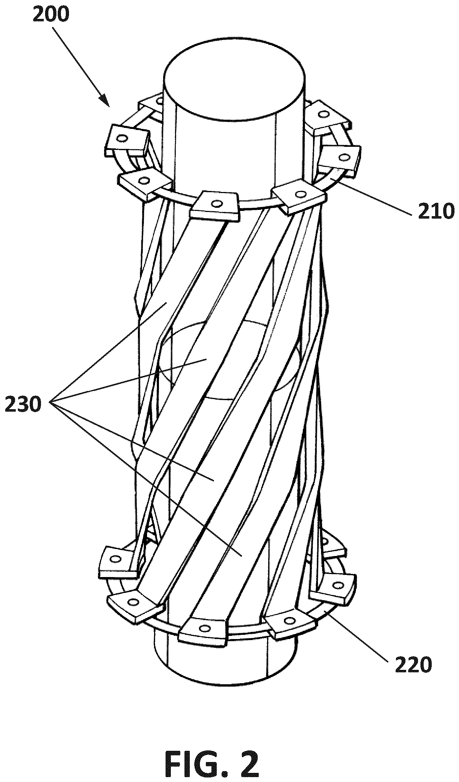

Figure 2 presents a twisted birdcage antenna (200), according to an embodiment, wherein the straight conductive elements of the traditional design are replaced by twisted conductive elements (230) with a helical configuration. The key structural features of the birdcage antenna (200) include:

- The conductive elements (230) or twisted legs that follow a helical path with a calculated twist angle, forming a constant angle with respect to the longitudinal axis of the cylinder. This helical geometry creates a more uniform and efficient electromagnetic field distribution. These conductive elements (230) are typically supported by ceramic holders, which provide structural stability and electrical insulation, ensuring proper alignment and mechanical integrity of the helical legs.

- The top and bottom conductive rings (210, 220) of the twisted birdcage antenna (200) remain parallel and unchanged in material and design with respect to the traditional birdcage antenna (100). The bottom conductive ring (220) is on the base of the antenna, where a RF coaxial input is located to allow the connection of the birdcage antenna (200) to an RF power source, and this is base designed to integrate seamlessly with the thruster system for plasma excitation.

- Capacitors are positioned between adjacent helically configured conductive elements (230) on both rings (210, 220) to tune the antenna to the desired resonant mode, particularly mode 1, which is critical in MRI (Magnetic Resonance Imaging) to ensure uniform excitation of nuclear spins and in plasma generation to ensure efficient coupling of RF energy into plasma and improve the ionization process.

The rings and legs of the twisted birdcage antenna (200) utilize high-conductivity materials, such as copper. The materials ensure minimal resistive losses during operation, maximizing energy efficiency. The helically twisted (230) generate a constructive interference pattern that enhances RF energy coupling with the plasma, resulting in higher plasma ionization efficiency and reduced power consumption. This helical geometry introduces additional inductance, which requires recalibration of the capacitor values for precise tuning. Therefore, capacitors with appropriate capacitance ranges are used to achieve optimal tuning. The capacitance ranges depend on the geometric configuration of the antenna, including the spacing and arrangement of the conductive rings and elements; typically, in the range of hundreds of picofarads (pF). The mode of operation known as azimuthal mode 1 is of particular interest, as it is the resonant mode wherein the current along the legs and rings of the antenna is distributed in such a way that the resulting electromagnetic field exhibits rotational symmetry around the longitudinal (z-) axis of the cylindrical structure, generating uniform electromagnetic fields.. However, other resonant modes of operation can also be selected with the appropriate capacitor values and adjustments to the legs' length typically in the range of 50 to 200 mm, and to the rings' diameter, approximately in the range of 30 to 60 mm.

The operation of the twisted birdcage antenna (200) is optimized for generating and sustaining plasma in VLEO environments. The helically twisted legs produce a highly uniform azimuthal current distribution, amplifying RF coupling with the plasma. This enhanced coupling enables:

1. Efficient ionization of residual atmospheric particles, such as atomic oxygen.
2. Stable plasma generation with lower RF power input compared to conventional designs.
3. Sustained propulsion with improved system efficiency, making it suitable for long-duration ABEP missions in VLEO.

The antenna operates within a frequency range of units to tens of MHz, which is ideal for helicon plasma generation. The design also allows for tuning to other resonant modes by adjusting the capacitors and structural dimensions.

An example of implementation to use the twisted birdcage antenna (200) in an ABEP propulsion system includes:

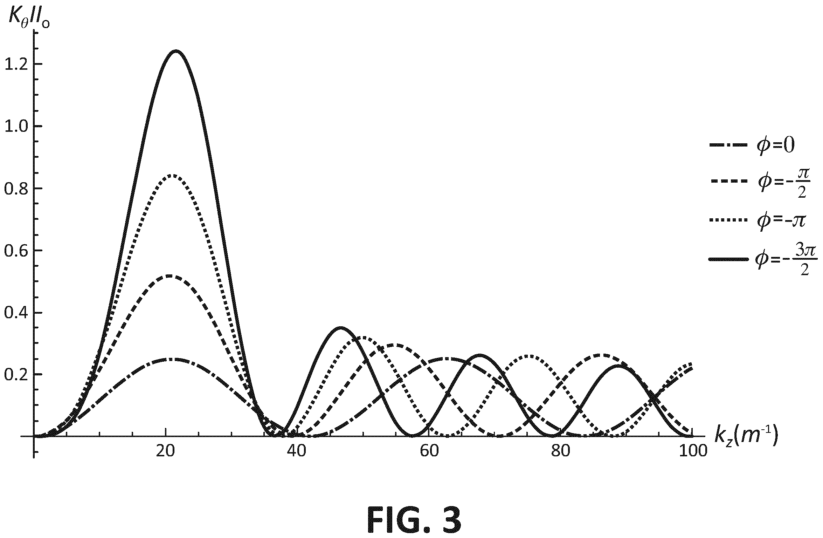

1. Initial Configuration: The helically twisted conductive elements (230) are assembled with a specific twist angle to maximize RF-plasma coupling. Capacitors are mounted between the helical legs on the top and bottom rings for resonance tuning.
2. Laboratory Testing: The antenna (230) is tested in simulated low atmospheric density environments. Parameters such as electromagnetic field distribution, plasma density, thrust, and overall efficiency are monitored.
3. Performance Results: Tests described below (shown in Figure 3) demonstrate that the twisted design of the birdcage antenna (200) enhances RF coupling, with azimuthal current peaks consistently higher than those of the traditional design. This leads to greater plasma ionization density, improved thrust, and lower power consumption.

Figure 3 shows the comparisons of azimuthal currents between classical straight birdcage antenna (100) with $\phi = 0$ and the twisted birdcage antenna (200) with its conductive elements (230) or legs rotated an angle $\varphi$ for some few examples $\phi = -\pi/2, -\pi, -3\pi/2$. Note that the enhancement factor, defined as $\left| K_\theta^{new} \right| / \left| K_\theta^{straight} \right|$ reaches approximately 6 in this example. This indicates that the coupling between feed power and plasma can be enhanced by up to six times with the twisted design compared to the traditional straight birdcage. This factor can be even bigger with different setups, this is just a particular example. The example of Figure 3 was realized to excite the same wavenumber $K_z$ in all the prototypes to compare how the rotation angle $\phi$ is affecting. The wavenumber quantifies how rapidly the wave oscillates in space and directly affects the propagation of helicon waves, the electromagnetic field distribution, and the resonance conditions in plasma-related applications The rotation introduced in the arrangement of the helical conductive elements (230) creates a hyperboloid shape in such a way that the antenna "twists" the excitation, following the same philosophy of the helicon wave propagating in a rotating motion. The azimuthal current $K_\phi$ is normalized and plotted as a function of the wavenumber $K_z$ (in m$^{-1}$) to illustrate how the different designs affect current intensity and field coupling. More particularly, Figure 3 shows:

- The curve corresponding to the traditional straight birdcage antenna (100), i.e., no rotation angle, $\phi = 0$, shows relatively low peaks in the azimuthal current $K_\phi$, indicating lower current magnitudes and thus weaker RF coupling efficiency.

- The other curves represent the twisted birdcage antenna (200) with helically twisted legs at rotation angles $\phi = -\pi/2$, $\phi = -\pi$, and $\phi = -3\pi/2$, respectively. Each of these designs demonstrates higher azimuthal current magnitudes, particularly in their primary peaks of $K_\phi$, especially for $\phi = -3\pi/2$ where the azimuthal current magnitude is the highest. This suggests that increasing the twist angle improves RF coupling and energy transfer to the plasma.

At the end, the twisted birdcage antenna (200) can be the trigger to make the helicon waves thruster efficiencies viable for real case scenarios ABEP applications. The optimized twist angle $\phi$ can be computed (typically involving less than one full turn) by just taking into account the geometric description of the antenna (radius and length), which can generate azimuthal currents with peak profiles up to 10 times higher than the regular birdcage antenna (100), implying the already mentioned electron density improvement. That is, the twisted birdcage antenna (200) is able to get the same power absorption in the plasma column than with the regular birdcage antenna (100) in the context of Helicon physics but with powers between 2 times and even 10 times smaller than usually needed.

The optimized twist angle, $\phi$, is obtained by a computational method which systematically simulates and analyzes the electromagnetic behaviour of the twisted birdcage antenna (200). The twist angle, $\phi$, of the conductive elements (230) is determined through numerical calculations aimed at maximizing the azimuthal current distribution $K_\phi$ for a given axial wavenumber $K_z$, the axial wavenumber (specifically refers to the component of the wavenumber along the longitudinal (z-) axis of the antenna) being systematically constructed to match it to a (reference) axial wavenumber of the corresponding straight birdcage antenna (100) for direct performance comparison. These calculations involve iterative algorithms solving Maxwell's equations and related boundary conditions to model the electromagnetic field distributions, azimuthal current patterns, and coupling efficiency for the given axial wavenumber, in order to determine the optimal antenna geometry that maximizes performance metrics (e.g., azimuthal current intensity). The twist angle, $\phi$, is optimized by identifying the maximum intensity pattern after selecting a length adapted to excite the same axial wavenumber as the corresponding straight birdcage antenna (100). That is, the optimization of the twist angle $\phi$, is based on solving the maximization equation:

$$\max_{\phi} I_{\mathrm{az}}\left(k_z, \phi\right)$$

where $I_{az}$ ($K_z$, $\varphi$) represents the azimuthal current intensity resulting from the conductive elements (230) for the given axial wavenumber $K_z$, and twist angle $\varphi$, with the antenna length further adjusted to achieve resonance at the same value $K_z$ as the corresponding straight birdcage antenna (100).

Aligning operating parameters, i.e., the twisted birdcage antenna (200) and the straight birdcage antenna (100) are evaluated at the same axial wavenumber and resonant frequency, allows that their electromagnetic field behaviour and current distributions can be compared fairly. The direct performance comparison ensures that the relative advantages of the twisted birdcage antenna (200) are quantitatively demonstrated against the (reference) straight birdcage antenna (100).

In ABEP applications, the birdcage antenna (200) is integrated with a thruster system to use the generated plasma for sustained propulsion in VLEO. The thruster system in the context of the invention refers to a propulsion mechanism designed to operate in low Earth orbit or other thin atmospheres by collecting ambient atmospheric particles (e.g., oxygen, nitrogen) as a propellant, and uses electric energy to ionize them, creating the plasma which allows the spacecraft to sustain orbits for extended periods.

However, the use of the twisted birdcage antenna (200) is not limited to ABEP systems. Its design is broadly applicable to plasma generation or excitation, enabling its use in a variety of electric propulsion thrusters, such as helicon thrusters using traditional propellants. This versatility ensures the antenna (200) can also be used in satellite propulsion systems operating in higher orbits beyond VLEO.

The main applications of the proposed antenna (200) include earth observation, where forestry, agricultural and maritime applications take advantage of the improved resolution of satellite imagery, creating new business opportunities in activities such as precision agriculture, fishing, control of port activities, and security, as well as natural disaster detection. Additionally, the antenna can benefit telecommunications systems, such as Smart Data Relays, High-Speed Internet access and trunking/backhauling for fixed services and aggregate mobile stations, Mobile High-Speed Satellite Internet Access based on terrestrial access technologies, Super Store and Forward (non-real-time messaging), Critical-type communications (including real-time messaging), Quantum Key Distribution (QKD), or Coverage extension for Aeronautical communication services, which will benefit from faster communications in the VLEO and beyond.

## Claims

1. A birdcage antenna (200) for generating plasma, the antenna (200) comprising:

   - two parallel conductive rings (210, 220), a top conductive ring (210) and a bottom conductive ring (220), separated along a longitudinal axis, both configured to provide structural support and hold capacitors for tuning the antenna (200) to a target resonant frequency;
   - a radiofrequency coaxial input located on the bottom conductive ring (220) to connect the antenna (200) with a radiofrequency power source to enable plasma generation;

   the antenna (200) **characterized by** further comprising a plurality of conductive elements (230) connecting the two parallel conductive rings (210, 220), wherein the conductive elements (230) are helically configured with a twist angle to form a hyperboloid shape creating an electromagnetic field, and a set of capacitors positioned between adjacent conductive elements (230) on both conductive rings (210, 220), the capacitors being configured to tune the antenna (200) to the target resonant frequency at which the electromagnetic field is created and the conductive elements (230) providing radiofrequency coupling to transfer energy from the created electromagnetic fields into the generated plasma.

2. The antenna (200) according to claim 1, wherein the twist angle of the conductive elements (230) is computed by maximizing, through numerical calculations, the azimuthal current intensity of the antenna (200) for a given axial wavenumber, and the length of the conductive elements (230) being adjusted to achieve resonance at the axial wavenumber, said axial wavenumber being iteratively aligned with a reference axial wavenumber of a straight birdcage antenna (100) for comparison.

3. The antenna (200) according to any preceding claim, wherein the length of the conductive elements (230) is in the range of 50 mm to 200 mm.

4. The antenna (200) according to any preceding claim, wherein the conductive elements (230) are made of copper.

5. The antenna (200) according to any preceding claim, wherein the antenna (200) is integrated with a thruster system to use the generated plasma for atmospheric-breathing electric propulsion.

6. The antenna (200) according to any preceding claim, wherein the antenna (200) is tuned to the target resonant frequency in the range of 13 MHz to 70 MHz.

**FIG. 1**
**(PRIOR ART)**

FIG. 2

FIG. 3

9

Europäisches
Patentamt
European
Patent Office
Office européen
des brevets

# EUROPEAN SEARCH REPORT

**Application Number**

EP 24 38 3350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUITTIENNE PH ET AL: "Towards an optimal antenna for helicon waves excitation", JOURNAL OF APPLIED PHYSICS, AMERICAN INSTITUTE OF PHYSICS, 2 HUNTINGTON QUADRANGLE, MELVILLE, NY 11747, vol. 98, no. 8, 20 October 2005 (2005-10-20), pages 83304-083304, XP012078765, ISSN: 0021-8979, DOI: 10.1063/1.2081107 | 1-4,6 | INV. H05H1/46 ADD. B64G1/40 F03H1/00 |
| Y | * abstract * * section III.A. Basic configuration; figure 1 * * section III.C. Twisted antennas; figure 6 * ----- | 5 | |
| Y | ROMANO F ET AL: "RF Helicon-based Inductive Plasma Thruster (IPT) Design for an Atmosphere-Breathing Electric Propulsion system (ABEP)", ACTA ASTRONAUTICA, PERGAMON PRESS, ELMSFORD, GB, vol. 176, 10 July 2020 (2020-07-10), pages 476-483, XP086325666, ISSN: 0094-5765, DOI: 10.1016/J.ACTAASTRO.2020.07.008 [retrieved on 2020-07-10] * section 1. Introduction; figure 1 * ----- | 5 | TECHNICAL FIELDS SEARCHED (IPC) H05H F03H B64G |
| A | US 2023/182929 A1 (ROMANO FRANCESCO [DE] ET AL) 15 June 2023 (2023-06-15) * the whole document * ----- | 1-6 | |

The present search report has been drawn up for all claims

| Place of search | Date of completion of the search | Examiner |
|---|---|---|
| The Hague | 9 May 2025 | Loiseleur, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 3350

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | Publication date | Patent family member(s) | Publication date |
|---|---|---|---|
| US 2023182929 A1 | 15-06-2023 | EP 4194694 A1 | 14-06-2023 |
| | | ES 2987578 T3 | 15-11-2024 |
| | | US 2023182929 A1 | 15-06-2023 |

EPO FORM P0459

For more details about this annex : see Official Journal of the European Patent Office, No. 12/82